Europäisches Patentamt

European Patent Office

Office européen des brevets

(11) Publication number: **0 129 432**

**A2**

# (12) EUROPEAN PATENT APPLICATION

(21) Application number: **84304090.8**

(22) Date of filing: **18.06.84**

(51) Int. Cl.³: **G 06 F 1/02**

(30) Priority: **17.06.83 CA 430693**

(43) Date of publication of application:
**27.12.84 Bulletin 84/52**

(84) Designated Contracting States:
**DE FR GB IT**

(71) Applicant: **542435 ONTARIO LIMITED d.b.a. Syntronics**
**30 Berryman Street**
**Toronto Ontario M5R 1M6(CA)**

(72) Inventor: **Everett, Ronald G.,**
**299, Sheldrake Boulevard**
**Toronto Ontario(CA)**

(74) Representative: **Newby, John Ross et al,**
**J.Y. & G.W. Johnson Furnival House 14/18 High Holborn**
**London WC1V 6DE(GB)**

(54) **Digital processor.**

(57) A processor for generating digital data organized as samples in successive time slots of a time division multiplexed multi-channel signal, as in the digital synthesis of complex waveforms, uses a sample generator (4) configured to allow parallel operations under control of micro-programs limited in length so that they can be executed within a single time slot. The sample generator draws data from a number of registers (f, g, h, i, j,r, v, z), some of which (r, y, z) receive data preprocessed in an interpolator (3) during the preceding time slot. Variable parameter data is supplied to the sample generator and interpolator, with data supplied to the former appropriately delayed, from a cyclically addressed memory array comprising two memories (a, b) of which one is always available for the reading of data whilst the other is being updated from an external source.

FIG. 1

- 1 -

DIGITAL PROCESSOR

This invention relates to a digital processor particularly but not exclusively adapted for the synthesis of complex analog waveforms or their numerical representations.

The synthesis of complex waveforms finds its best known application in the field of musical performance as in electronic organs and synthesizers, although such waveforms also have actual or potential applications for example in industrial robotics, navigational control systems, computer aided design and manufacture, synthesis of acoustical phenomena, voice synthesis, telecommunications, audio signal processing and environmental control systems. Typically a synthesizer for such purposes requires a multiple channel capability, and must be capable of producing waveforms with frequency components extending to and beyond the upper end of the audio frequency range.

Numerous proposal have been made for digital synthesis of such waveforms. A problem common to these proposals is that multiple channel operation involves either plural synthesizers or some form of time division multiplexed operation. The first of these alternatives obviously entails added complexity and expense, whilst the latter requires a greatly increased system clock frequency according to the number of channels to be accommodated. This in turn requires either compromises in performance to keep the system clock frequency down to a reasonable level, the development of special synthesis methods designed to operate at relatively lower clock frequencies, generally with a penalty in flexibility and complexity and requiring custom LSI for their implementation at reasonable cost (thus ruling out their use in relatively small volume applications), or the use of components capable of operating very high clock frequencies, with a penalty in expense and power consumption. A further problem arises when it is desired to implement the synthesis under control of a conventional micro-computer, since available microprocessor chips are simply not fast enough to execute high performance synthesis of multiplexed waveforms of the complexity contemplated by the present inventor.

The present invention seeks as its primary objective to provide a processor capable of operating under control of a computer or a fixed program, which is particularly suited for the generation of digitized multiplexed complex waveforms using techniques which can be externally defined, and may include both a wide range of known techniques and any future techniques which may be developed within the capabilities of the processor, as well as permitting certain new techniques through the use of feedback within the processor itself.

According to the invention, there is provided a processor for generating digital data arranged as samples in successive time slots of a time division multiplexed multiple channel signal, comprising a sample generator having a plurality of data registers, a plurality of data buses, a plurality of interbus registers, and at least one arithmetic element, the inputs and outputs of the interbus registers, the outputs of the data registers, and the function of the at least one arithmetic element all being selectively enabled by control signals, and the interconnection of the registers, buses and element being such that selective simultaneous enabling of these components permits simultaneous execution of plural different operations in different parts of the processor, a microprogram memory configured to store microprograms of defined maximum length, and a decoder connected to receive successive digital words representing steps in a selected microprogram from the microprogram memory and to decode said words into selected ones of said control signals, the defined maximum length of the microprograms being such that the sum of the time required to execute the steps of a microprogram does not exceed the length of a time slot of said signal.

Preferably the processor incorporates arithmetic elements in the form of at least one multiplexer and at least one arithmetic logic unit, and the sample generator is associated with at least one interpolator for preprocessing data and outputting that data to certain of the data registers, each interpolator operating synchronously with the sample generator to preprocess in one or several time slots data utilized by the sample generator in a subsequent time slot, and to deliver said processed data to certain of the data registers associated with the sample generator.

Preferably also the processor includes a memory array storing data as to the variable parameters, means cyclically to address the memory array so as successively synchronously to read out data required for generation of samples in successive time slots of the output signal, and a set of registers connected to receive data read from the memory array and required for the generation of a particular sample, certain of said sets of registers being other of the data registers associated with the sample generator, and certain of said registers being data registers associated with the interpolator or interpolators, the data registers associated with the sample generator being such as to delay the availability of the data to the next time slot compared with the availability of data from the data registers associated with the interpolator or interpolators. The memory array includes a pair of memories of which the one is always synchronously addressable by the cyclical addressing means, the other memory being synchronously addressable during a read phase by the cyclical addressing means, and asynchronously addressable by an externally connectable address bus during a write phase, the one memory being in a write phase writing data read from the other memory whilst the latter is in its read phase, and otherwise in a read phase, whereby one memory is always available for the cyclical reading of data. In a preferred arrangement, the above read and write phases can be reversed so that the memory array may be used for the bidirectional transmission of data between the processor and an external data bus.

Such an arrangement permits rapid and versatile generation of samples, whilst variable parameter data can be readily updated from external sources without interfering with the operation of the processor. If a single microprogram has insufficient steps to complete the processing of a sample, other channels and microprograms associated therewith may be concatenated; thus the available channels may be distributed to different tasks, or even different users, according to the data crunching capability required.

Further features of the invention will become apparent from the following description of a preferred embodiment with reference to the accompanying drawings in which:

Figure 1 is a block diagram of the processor; and

Figure 2 is a more detailed block diagram of the block 4 in Figure 1, also showing certain adjacent blocks.

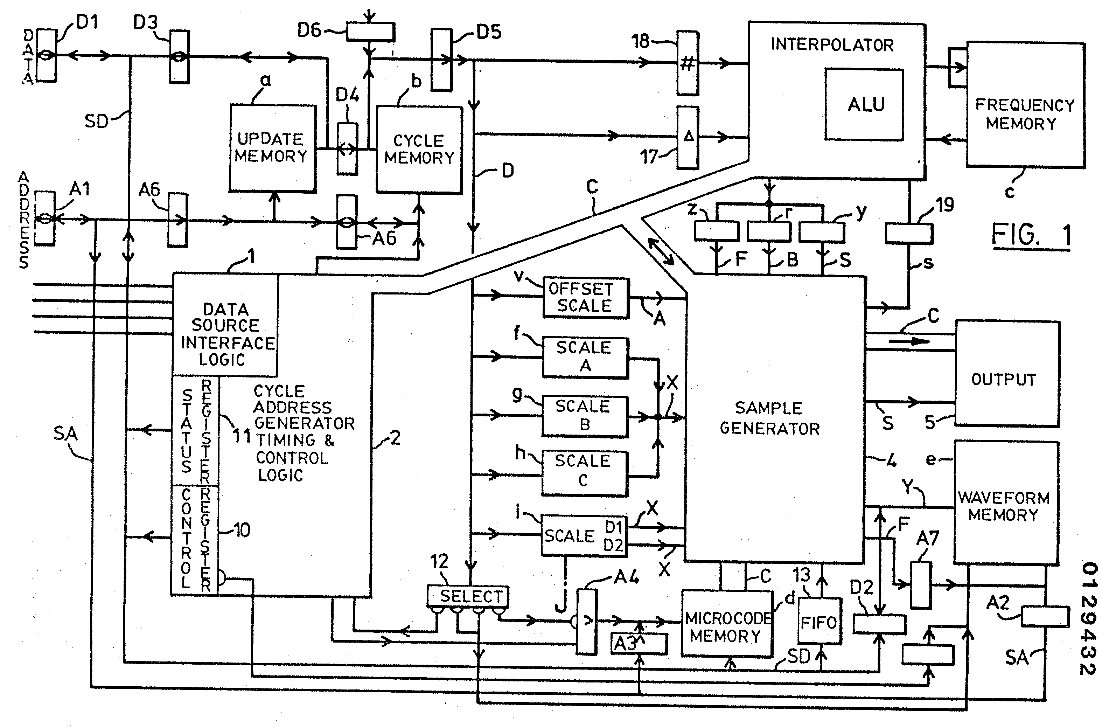

Referring to Figure 1, the processor shown comprises five main functional blocks, external data source interface control logic 1, a cycle address generator, control logic and timing block 2, an interpolator block 3, a sample generator 4, and an output block 5, operating in conjunction with five principal memory blocks, an update memory a, a cycle memory b, a frequency derivation table memory c, a micro-code memory d and a waveform memory e, and eight buses, discussed further below.

Bus SD is a system data bus, transferring data between the processor and an external data source through a buffer D1, which external data source may be a computer used to control the processor, or a read only or other memory under suitable control. For the purposes of subsequent description, the external data source is assumed to be a computer. Communication is also had with the external data source by a system address bus SA, via a buffer A1 carrying address data from the external data source. The five memories referred to above have addresses in the address space of the external data source, as do registers 12 and 13 referred to further below. Communication with the external data source is completed by conventional control lines 6, 7, 8, 9, for read and write, synchronization and busy status signals.

These communications are controlled by the external data source interface control logic 1, and in order to provide the greatest versatility in a single processor design, this logic is preferably configured in a manner known per se selectively to receive or send data in 8 or 16 bit formats and receive 12, 16 or 24 bit addresses, the control lines being polarity reversible. The data and addresses are reconfigured to the same formats on the buses SD and SA, regardless of the data source format. In the example described, the bus AD has a 16 bit format and the bus SA an 11 bit format. The bus SD also has access to an internal cycle address, control and status bus C, of 28 bits in the example described, which coordinates the operations of the main functional blocks 1-5, this access being a control register 10 and a status register 11.

Outputs from the processor are handled by the block 5. This block may contain the conventional circuits required to receive multiple channels of digital data from the sample generator 4 on a bus S, typically of 16 bit format, and to process this data under control of signals on bus C. Where analog outputs are required, the data will be passed through a digital/analog converter, deglitched, demultiplexed using sample and hold circuits, and anti-aliasing filtered, and the individual channels outputted separately or combined in any desired manner.

The portions of the processor so far described represent its communications with the outside world and utilize essentially conventional technology. There will now be described those portions of the processor responsible for the generation of the sample appearing on the bus S. Assuming for example that the processor is to produce 16 channels of output data, each with a frequency response extending to 16 kHz, then a sampling rate in each channel of 32 kHz is appropriate. The sample generator 4 must therefore be capable of generating one 16 bit sample each 1.953 microseconds. Assuming a requirement for execution of any reasonable number of instructions for generation of a sample, this is well beyond the capability of any conventional microprocessor, and the problem is aggravated as the number of channels and frequency response required is extended, to the point at which the necessary data crunching capability could only conventionally be provided using a so-called "supercomputer". The processor of the invention is thus provided with a special architecture which takes advantage of the timing structure provided by the output sample rate to generate a number of samples in parallel with the generation of each such sample reaching a different stage at any particular moment in a coordinated production line type procedure. Operation of this production line procedure is coordinated by timing signals generated in the cycle address generator 2 and applied to the bus C. Assuming for the sake of example a 20.48 MHz clock signal produced by generator C, a single clock cycle is designated a "minor step" with a cycle time of 48.828 ns, and the clock is divided down to provide timing signals for "major steps" of 195.3125 ns (four minor steps), "minor cycles" of 1.953 microseconds (ten major steps), and "major cycles" of 31.25 microseconds (sixteen minor cycles) corresponding to a repetition rate of 32 KHz. Further division down of the clock is used to provide a selectable "variable parameter update cycle rate" providing a timing signal every 8, 16, 32 or 64 major cycles.

It will be appreciated from the foregoing that a sample will be available on the bus S following each minor cycle, and during each major cycle a single sample for each channal will have appeared successively on the bus S. It should also be appreciated that all of the timings set forth above are dependent upon the basic clock rate, and this may be varied to provide any desired sampling rate within the capabilities of the actual components employed to implement the processor. In the example described, the processor may be implemented using conventional industry standard TTL logic which at least in its higher speed families is readily capable of handling 20 MHz clock rates.

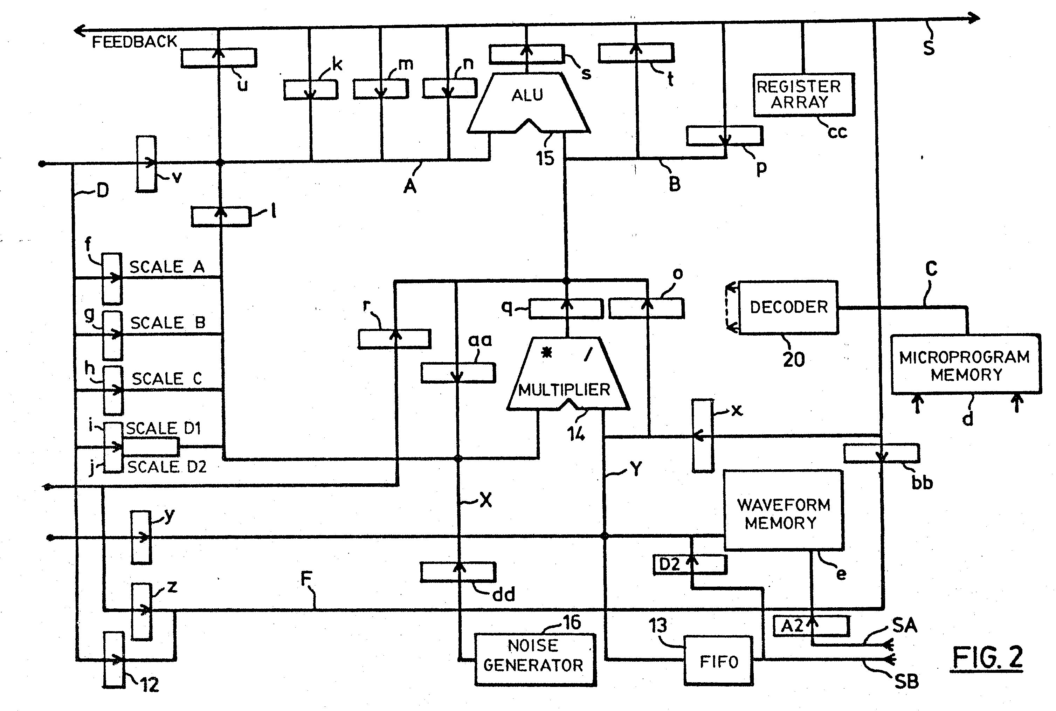

The sample available on the bus S is generated in the sample generator 4 during a minor cycle. Referring now also to Figure 2, this shows a simplified block diagram of the functional components of the generator 4 and their interconnections together with surrounding registers and memories from which the generator can call data. These external registers and memories include the waveform memory e, the scale and offset scale registers f, g, h, i and v, registers r, y and z receiving data from the interpolator 3, and a first-in first-out (FIFO) register 13 receiving data directly from the bus SD. An additional data input is provided from a white noise source in the form of a pseudo-random number generator 16. Internally the generator 4 comprises at least one 16 bit digital multiplier 14 which in the example shown receives inputs from buses X and Y, and provides an output to register q whose output is connected to a bus B, and at least one 16 bit arithmetic logic unit (ALU) 15 which in the example shown receives inputs from buses A and B, and provides an output to a register s whose output is connected to a register S. Bus A is connected to bus S through register u, and bus S to bus A through registers k, m and n. Bus B is connected to bus S through register t and bus S to bus B through register p. Bus X is connected to bus A through register l, and bus B to bus X through register aa. Bus Y is connected to bus B through register o and bus S is connected to bus Y through register x. Bus S is also connected to a bus F through register bb. Bus F addresses the waveform memory e through buffer A7, and the waveform memory can thus receive address data from bus SA through a buffer A2, or from the outputs of registers z or bb or from the selector 12. Data from the waveform memory is output to the bus Y, which can also transfer data in either direction between the waveform memory e and the system data bus SD via a buffer D2, and receive data from register y. Data appearing on bus S can be loaded into a register array cc which has a capacity to store two samples for each channel. Availability of such data is required in the implementation of certain digital filtering techniques.

The inputs and outputs of the various internal registers are enabled, the waveform memory is addressed, the outputs of the various external registers are enabled, and the functions of the multiplier and arithmetic logic unit are selected, all under control of a microprogram which in the example described is of forty steps, and which successively enables operations by the generator which result in generation of a single sample from the data available in the external registers and waveform memory. The content of these programs will depend upon the synthesis technique being utilized, and as such forms no part of the invention. Although the microprogram has a very limited number of steps, the large variety of external data sources available together with the numerous interbus connections provided by the internal registers allows great versatility in the execution of known synthesis techniques and the development of new ones.

Microprograms are stored in the microprogram code memory d in the form of 32 bit words transferred at successive minor steps to the control bus C and thence to a decoder 20 within the sample generator 4 in which they are vertically decoded into 52 control bits, each of which controls a particular function in the sample generator. Thus some bits control the loading of registers, some the output of registers, and some the functions of multipliers 14 and the ALU 15. Connections between the decoder and the various components of the sample generator are omitted for the sake of clarity. The memory d is provided in fact with space for more than 40, typically 64 words in each microprogram so as to allow for conditional branches within a microprogram.

The microprograms are loaded into the memory from the system data bus SD under control of the system address bus SA via buffer A3 and are selected under the control of selector 12 and control logic 2 via buffer A4. It will be appreciated that any such 40 step microprogram can be executed within a single minor cycle, and the desired rate of sample synthesis can thus be maintained. Depending upon the complexity of the operations to be carried out by a microprogram, it will be understood that it will often be desirable to arrange these operations so that more than one operation can be carried out in parallel in different parts of the generator, a capability which is provided by the internal architecture of the generator. The number of control bits makes possible an extremely large instruction set, in which a single instruction can in effect simultaneously enable a number of separate operations in different areas of the generator. In effect the instruction set utilized can be selected to suit any particular application, although it will be noted that the architecture of the sample generator is such that each instruction is fully externally defined. All conditional testing must therefore be carried out externally to the sample generator. Such testing may result in conditional branches within a microprogram, but will not affect the execution of any instruction actually applied to the bus C.

The processor is disabled during writing into the memory $d$ to prevent spurious outputs, and the same is true during writing into the memories $c$ and $e$, for the same reason. In most applications, these memories will be loaded during initial set up of the processor, and changes will not be necessary during waveform generation. It will however usually be necessary during waveform generation to update from the external data source data relating to variable parameters, and to preprocess some of this data. The memories $a$ and $b$ together form a memory array which enables updating of data relating to variable parameters in a manner transparent to the processor. Incoming data from the system data bus SD is applied via a buffer D3 to the update memory $a$ into which it is written under control of the system address bus A via buffer A5. On development of an update timing signal by the block 2, as previously described, the block 2 generates address data which is applied to the cycle memory $b$ and also to the update memory $a$ via a buffer A6, and the data written into the memory $\underline{a}$ is read out, and transferred to and written into memory b through buffer D4. Typically the memories $\underline{a}$ and $\underline{b}$ have a 1K or 2K x 16 bit capacity and the address cycle time of the generator 2 occupies one major cycle, i.e. it generates all of the cycle memory addresses in sequence during this period. During data transfer, the buffer D3 isolates the update memory from the bus SD, and the buffer A5 isolates the system address bus from the update memory. Thus access to the update memory by the external data source is blocked for only one major cycle in each update cycle. During this same period, data is supplied to a variable parameter data bus D5 from the update memory $\underline{a}$ instead of the cycle memory $\underline{b}$, and there is thus no interruption of the flow of data to the bus D, which is provided from the cycle memory as the generator 2 cyclically generates its addresses during the read phase of the latter memory. It will often also be necessary for output data from the block 5 or elsewhere in the system to be transferred back to the bus SD, and for this purpose the memory array may be arranged to be bidirectional. Return data is made available at a buffer D6 and the buffers D3 and D4 are made bidirectional. By suitable switching of the buffers and read/write signals, the array can also operate in reverse to make data from within the system available on the bus SD.

Data in the memories $\underline{a}$ and $\underline{b}$ is typically organized so that data for successive channels may most readily be sequentially addressed. Such data is loaded from bus D into a series of registers including the registers $\underline{f}$, $\underline{g}$, $\underline{h}$, $\underline{i}$ and $\underline{j}$ to which reference has already been made, the selector 12, and two registers 17 and 18 at inputs to the interpolator 3. Of these registers, registers $\underline{v}$ and selector 12 are double buffered for reasons which will become apparent. During the major steps of each minor cycle, the registers are loaded in turn with successive words from the cycle memory in the following order 17, 18, 12, $\underline{v}$,

f, g, h, i and j, 17, 18 and this is repeated for successive minor cycles in a major cycle so as successively to load data pertaining to each channel. It will be noted that the registers 17 and 18 are each loaded twice during a minor cycle, the distribution of the data being as set forth in the following table.

| REGISTER | CHANNEL | WORD | | DESTINATION |
|---|---|---|---|---|
| 17 | 1 -> 16 | 0 | - | to Interpolator as delta value |
| 18 | 1 -> 16 | 1 | - | to Interpolator as Centre or Next Value |
| 12 | 1 -> 16 | 2 | - | to Register 12 |
| v | 1 -> 16 | 3 | - | to 'Offset' Register Sample Generator |
| 17 | 1 -> 16 | 8 | - | to Interpolator as delta value |
| 18 | 1 -> 16 | 9 | - | to Interpolator as Next Value |
| f | 1 -> 16 | 4 | - | to Scale A Register Sample Generator |
| g | 1 -> 16 | 5 | - | to Scale B Register Sample Generator |
| h | 1 -> 16 | 6 | - | to Scale C Register Sample Generator |
| i & j | 1 -> 16 | 7 | - | to Scale D Register Sample Generator |

It should be noted that the registers other than those delivering data to the interpolator 3 have an extra stage so as to delay the data supplied to them for one minor cycle whilst the interpolator operates as described below upon the data received from the registers 17 and 18 and delivers processed data to the registers r, y and z associated with the sample generator 4.

It will be understood from the foregoing that during each minor cycle, two pairs each of two variables are supplied to the interpolator 3 sequentially. In the example under discussion, the first pair is related to frequency and the second pair to amplitude. On receipt of the first pair of variables, defining a centre or end (next) value of frequency, and an incremental or delta component of frequency which modifies or modulates that frequency, an arithmetic logic unit in the interpolator carries out the necessary modification or modulation. It should be noted that Word 0 (see table) includes bits instructing the interpolator whether to modify or modulate or make no frequency variance (delta off), and instructing the sign of delta where modulation is to be carried out. Once the necessary arithmetic operations have been carried out, an address in the frequency derivation table memory $c$ is derived and the address is selected and accessed. During the time required for memory access, the second pair of variables is loaded and subjected to similar operation in the ALU to derive amplitude data, which together with frequency data looked up memory $c$ is gated into the registers $y$ and $z$ and $r$ respectively for access by the sample generator during the following minor cycle. A register 19 makes available feedback from the bus S in the sample generator, which in certain modes of operation may be used as amplitude state in the interpolator 3.

From the foregoing, it will appreciated that variable parameter data on the bus D is processed in two phases, each occupying one minor cycle. During the first phase, the interpolator 3 carries out preprocessing of frequency and amplitude information, while during the second phase, the sample generator 4 takes the preprocessed and other data and completes the generation of a sample. In the meanwhile, the interpolator preprocesses data for the following sample, and so on. The arrangement still further enhances the rate at which the processor can produce samples at a given rate and resolution, without decreasing the system clock frequency.

In use, the system is set up by selecting its configuration where selectable, e.g. to suit the external data source, defining the method of synthesis to be used in each channel and the data required, defining for each channel the operations to be carried out on that data by the interpolator 3 (amplitude and/or frequency modification or modulation) and by the sample generator 4, i.e. the operations to be carried out by the relevant microprogram, organizing these operations into a practical sequence which can be executed by the sample generator whilst if necessary memorizing parallel execution of these operations, generating a suitable microprogram to control execution of these operations, down loading the microprograms from the external data source to the micro-code memory $d$, and loading the memories $c$ and $e$ if not in the form of read only memory. During operation, variable parameter data for the various channels is configured by the external data source and loaded into the update memory $a$, using the buses SD and SA. The memory $a$ can be updated at any time except when its contents are being transferred to the cycle memory, and its operation is asynchronous except during this transfer operation, at which time it is synchronized with the cycle memory address sequence so as to allow uninterrupted access of the processor to the variable parameter data.

Although only a single interpolator 3 has been shown, it may be advantageous to provide additional interpolators to provide other preprocessing functions. For example, less elaborate preprocessing could be carried out by an interpolator carrying out simpler and faster operations, but with enhanced communication with the external control means so that its look-up tables can be updated in real time.

CLAIMS

1. A processor for generating digital data arranged as samples in successive time slots of a time division multiplexed multiple channel signal, characterized in that it comprises a sample generator (4) having a plurality of data registers (f, g, h, i, j, r, v, y, z, cc), a plurality of data buses (A, B, F, S, X, Y), a plurality of interbus registers (k, l, m, n, o, p, q, s, t, u, w, x, aa, bb), and at least one arithmetic element (14, 15), the inputs and outputs of the interbus registers, the outputs of the data registers, and the function of the at least one arithmetic element all being selectively enabled by control signals, and the interconnection of the registers, buses and element being such that selective simultaneous enabling of these components permits simultaneous execution of plural different operations in different parts of the processor, a microprogram memory (d) configured to store microprograms of defined maximum length, and a decoder (20) connected to receive successive digital words representing steps in a selected microprogram from the microprogram memory and to decode said words into selected ones of said control signals, the defined maximum length of the micro-programs being such that the sum of the time required to execute the steps of a microprogram does not exceed the length of a time slot of said signal.

2. A processor according to Claim 1, characterized by incorporating arithmetic elements in the form of at least one multiplier (14) and at least one arithmetic logic unit (15).

3. A processor according to Claim 1, characterized in that the sample generator (4) is associated with at least one interpolator (3) for preprocessing data and outputting that data to certain of the data registers (r, y, z), the interpolator operating synchronously with the sample generator to preprocess in one time slot data utilized by the sample generator in the next time slot, and to deliver said processed data to said data registers (r, y, z) associated with the sample generator.

4. A processor according to Claim 3, characterized in that the interpolator (3) is associated with data registers (17, 18) and comprises an arithmetic logic unit (ALU) configured to receive data from the data registers, as values of variables and increments of those variables, and to calculate modulated or modified values those variables.

5. A processor according to Claim 3, characterized in that it includes a memory array (a, b) storing data as to the variable parameters, means (2) cyclically to address the memory array so as successively synchronously to read out data required for generation of samples in successive time slots of the output signal, and a set of registers (f, g, h, i j, v, 17, 18) connected to receive data read from the memory array and required for the generation of a particular sample, certain of said sets of registers (f, g, h, i, j, v) being data registers associated with the sample generator, and certain of said registers (17, 18) being data registers associated with the interpolator, the data registers (f, g, h, i, j, v) associated with the sample generator being such as to delay the availablility of the data to a later time slot compared with the availability of data from the data registers (17, 18) associated with the interpolator.

6. A processor according to Claim 5, characterized in that the memory array includes a pair of memories (a, b) of which the one (b) is always synchronously addressable by the cyclical addressing means, the other memory (a) being synchronously addressable during a read phase by the cyclical addressing means, and asynchronously addressable by an externally connectable address bus (SA) during a write phase to provide data to an external data bus (SD), the one memory providing a write phase for writing data read from the other memory whilst the latter is in its read phase, and a read phase whilst the latter is in a write phase, whereby one memory is always available for the cyclical reading of data.

7. A processor according to Claim 6, characterized in that the memory array includes a data buffer system (D3, D4, D5, D6) such that one memory unit (b) may receive data during a write phase either from the other memory or from within the processor, and the other memory unit (a) may read or write data during a read or write phase from or to either the external data bus (SD) or the one memory (b).

FIG. 1

FIG. 2

0129432